# EUROPEAN PATENT SPECIFICATION

(11) **EP 2 208 037 B1**
(45) Date of publication and mention of the grant of the patent: **04.01.2017**
(21) Application number: 08801426.1
(22) Date of filing: 14.10.2008
(51) Int. Cl.: G01M 3/00

(54) **GAS LEAK DETECTOR, AND A METHOD FOR GAS LEAK DETECTION**
GASLECKDETEKTOR UND VERFAHREN ZUR GASLECKDETEKTION
DÉTECTEUR DE FUITE DE GAZ ET PROCÉDÉ DE DÉTECTION D'UNE FUITE DE GAZ

(30) Priority: 17.10.2007 DK 200701497
(43) Date of publication of application: 21.07.2010
(73) Proprietor: Kosan Crisplant A/S, 8200 Arhus N (DK)
(72) Inventor: JENSEN, Erik, DK-8900 Randers (DK); SKJØDT, Chresten Bugge, DK-8900 Randers (DK)
(74) Representative: Plougmann Vingtoft a/s
(86) International application number: PCT/DK2008/050251
(87) International publication number: WO 2009/049629

(56) References cited:
- FR-A- 2 764 978
- FR-A- 2 764 979
- US-A- 5 052 216

## Description

### FIELD OF THE INVENTION

The invention relates to a gas leak detector, and in particular to a gas leak detector for detecting a leak of a pressurised gas, such as a liquified petroleum gas, from a gas container in an explosion secured area. The invention also relates to a gas leak detector calibrating unit.

### BACKGROUND OF THE INVENTION

Filling of containers with one or more gases is a common task of packaging gas e.g. for transportation or storage purposes. Within the field of filling containers with gas, such as liquid petroleum gas - also known as LPG, filling systems and/or transport systems with turntables and carrousels are often used.

In order to ensure that the gas containers do not leak, one or more gas leak detectors is normally provided in such systems. In case a leak of gas from a gas container is detected this particular container will be sorted out either automatically or manually. Due to the fire and/or explosion hazard in such environment all operation is provided in a secured way among others to prevent any sparks to occur.

This type of gas filling systems with leak-detecting is used for filling and leak detecting several hundreds or even thousands of containers per hour with LPG.

FR2785049 discloses gas bottles which arrive on a platform 1 and are positioned 3 on axis ZZ. A bell 6 covers the head of the bottle and after air rinsing 10, 62, further air and any gas is passed through a valve 19 to an infrared absorption analyzer 141. Finally the valve is opened and a pressure depression draws the remaining air and gas through the analyzer. An electronic unit 142 interprets the results and signals a module 5 which controls the subsequent bottle path.

FR 2764978 discloses a system for detecting gas leakage from a gas cylinder and valve and includes a mobile cover which is intended to encase the valve assembly. An infrared sensor is provided which is sensitive to the presence of the gas contained within the cylinder. This is connected to a pipe which leads from the cover which surrounds the valve assembly, enabling the gas within the cover to be sampled. Beyond the infrared detector there is a device to force gas through the pipe, from the mobile cover, past the infrared sensor and out into the atmosphere. The diameter of at least part of the transfer pipe is reduced in order to ensure a speed of gas flow in excess of 10 metres per second. A pipe diameter of 5mm or less may be chosen to achieve a gas flow speed of 20 to 70 metres per second.

It has been found that the prior art systems do not ensure that any leaking gas containers are detected in due time, while factors such as filling and leak detecting capacity of such systems are also considered.

The inventor of the present invention has appreciated that an improved gas leak detector, method of detecting a leak and leak detecting system is of benefit, and has in consequence hereof devised the present invention.

### SUMMARY OF THE INVENTION

It may be seen as an object of the present invention to provide an improved gas leak detector, method of detecting a leak and leak detecting system. Preferably, the invention alleviates, mitigates or eliminates one or more of the above or other disadvantages singly or in any combination.

Accordingly, a gas leak detector is provided for detecting a first leak of a pressurised gas from a gas container valve unit and/or from any additional possible outlets such as a heat safety outlet of a valve unit and/or a second leak between the gas container valve unit and the gas container such as at the bung between the valve unit and the top of the gas container, the gas-leak detector comprising
- a housing which is connectable to the gas container so as to surround at least the valve unit of the gas container and so as to surround preferably a surface part of the gas container where the valve unit is provided, and wherein
- the housing comprising means for providing a substantially gas tight connection between the housing and the surface part when the housing is connected to the surface part in order to form a substantially closed hollow space within the housing, and wherein the gas-leak detector furthermore comprises
detection means for detecting the first leak and/or the second leak, and where the detection means is provided in the substantially closed hollow space in the housing, whereby any leak of gas may be detected, while any leak of gas remains within the substantially closed hollow space.

Thus, an improved gas leak detector is provided. A possible advantage by providing the substantially closed hollow space is that any leaking gas will remain therein. If or when gas is leaking from the gas container, a concentration of the gas will relatively increase within the substantially closed hollow space compared to prior art detectors, where the gas is transferred from the substantially closed hollow space.

A relative increase of gas within the housing has the possible advantage that an improved detection may be provided and possibly that a detection period may be decreased relatively compared to a leak detector where the gas is transferred from a housing or a so-called bell, or compared to a leak detector where the gas is even forced out of the housing or bell for detection outside the housing.

The substantially closed hollow space means herein a space where a gas may possible be forced into, but where any gas is not allowed to or able to exit under normal circumstances. A gas forced into the substantially closed hollow space may e.g. be the gas itself being forced out of the gas container but it may additionally or alternatively be a relative little quantity of air such as cleaning air and/or turbulence air, which has not yet been shut of.

A possible advantage of providing detection means for detecting the first leak and/or the second leak, and where the detection is provided in the substantially closed hollow space in the housing, while any leak of gas remains within the substantially closed hollow space, is that it is not necessary to transport any leaking gas out of the housing for a detection of leaking gas. This has the possible advantage of time saving and furthermore possibly also that the concentration of gas is not relatively decreased because of not having to transfer the gas, and possibly additional air needed for transferring the gas, e.g. to a remote detection of the presence of leaking gas.

When the detection means comprises outputting means for outputting a signal to the substantially closed hollow space and/or where the detection means comprises receiving means for receiving the signal along with at least one possible change of the signal due to the signal being sent through the substantially closed hollow space, a possible advantage is that an infrared light sensor or detection principle may be used, similar to or as well as a camera system based on emitting light and providing a light sensitive element as receiving means of the emitted light.

In such systems where detection is based on optical receiving means, as well as a system where detection possibly is based on a audio-technical receiving means such as a microphone, detection of the first leak and/or second leak is corresponding to and determined based on the signal received by the receiving means.

When at least a part of the detection means is adapted to form a part of the housing enclosing the substantially closed hollow space, a possible advantage is that the part of the detection means gets as close to any leaking gas as possible. Furthermore, in an example where the part of the detection means comprises a front part of a lens or other optical element which is forming part of an inner wall of the housing, this part of the detection means may easily be cleaned, and hereby service of the leak detector is easily provided.

In accordance with embodiments of the inventions, the signal is a light signal, and/or the detection means comprises at least one optical lens and/or the detection means comprises an infra-red light transmitter and an infra-red light receiver. When providing one or more optical lenses as part of the detection means, a possible advantage is that a certain profile of a light beam can be provided as the signal within the housing.

In accordance with embodiments of the inventions, the signal is a light signal, and/or the detection means comprises at least one concave mirrors and/or the detection means comprises a light transmitter for transmitting light with selected focus. When providing one or more concave mirrors as part of the detection means, a possible advantage is that a light beam with a certain focus can be provided as the signal within the housing.

In accordance with embodiments of the inventions, the signal is a light signal, and/or the detection means comprises at least one optical prism and/or the detection means comprises a light transmitter for transmitting light with multiple wavelengths. When providing one or more optical prisms as part of the detection means, a possible advantage is that a light beam with multiple wavelengths can be provided as the signal within the housing.

In accordance with embodiments of the inventions, the detection means comprises at least one optical fibre extending to and/or from the light transmitter and light receiver, respectively. A possible advantage by the detection means comprising at least one optical fibre is that a light outputting or emitting means and/or a light receiving means may be provided remote from the housing because the optical fibre can be used to lead the light to and/or from the housing.

It is to be understood that outputting and receiving means, such as a light emitter and a light receiver, may be build into a combined unit. Furthermore it is to be understood that reflection means, such as a mirror, may be used and provided in the housing in order to reflect signals within the housing. Reflection means can be provided in order to utilise the combined unit and/or in order to increase a length which the signals travel within the housing prior to being received.

In accordance with an embodiment the infra-red light transmitter and/or the infrared light receiver are/is comprised in the housing. A possible advantage hereby is that an optical fibre can be omitted, thus enabling fewer components necessary in the gas leak detector.

When the detection means for detecting if there is the first leak and/or the second leak is provided for a detection of any gas, which is present only inside the housing, a particular advantageous embodiment is provided.

Furthermore, in accordance with embodiments of the invention, the means for providing the substantially gas tight connection comprises that the shape of an opening in the housing is structurally adapted to fit to and surround the surface part of the gas container in immediate vicinity of where the valve unit is provided. The means for providing the substantially gas tight connection may comprise the housing being provided with a flexible substantially gas tight material around the opening of the housing, and which flexible material is in contact with the surface of the gas container in immediate vicinity of the valve unit when the gas container is detected for any leak.

Further embodiments of the gas leak detector are described in the claims.

In accordance with an object of providing an improved method of detecting a leak there is provided a method of detecting a first leak of a pressurised gas from a gas container valve unit and/or a second leak such as at the bung between the gas container valve unit and the gas container, the method comprising
- connecting a housing to the gas container so as to surround a valve unit of the gas container and so as to surround a surface part of the gas container where the valve unit is provided, and
- providing a substantially gas tight connection between the housing and the surface part when the housing is connected to the surface part in order to form a substantially closed hollow space within the housing, and wherein the method furthermore comprises
detecting the first and/or the second leak in the substantially closed hollow space in the housing while any leak of gas remains within the substantially closed hollow space.

Possible advantages of the method follow from the described in relation to the gas leak detector and/or from the remaining description. When or if the method further comprises adding a gas to inside the housing prior to detecting and/or while detecting any leak a possible advantage is that the housing may be emptied from any gases or parts which may interfere with the detection and/or the detection of any gas may be improved in that any leaking gas can not hide from the detection.

In accordance with providing an improved leak detecting system there is provided a leak detecting system which comprises one or more gas leak detectors as described herein and a control system.

When or if the leak detecting system comprises a plurality of gas leak detectors, where each gas leak detector is mounted on a transport unit in a transport system for transporting the gas container in a gas container filling system and/or in a gas leak detecting system and where the gas leak detectors are hereby operable to detect any leak of gas for a prolonged period of time a possible advantage may be that an improved detection is provided when compared to if the gas containers where to be transported to a leak detecting station. In particular, providing a leak detecting system with several leak detectors which are transported around in a transport system is enabled or made far more easily when any leaking gas remains in the housing, i.e. when any leaking gas does not have to be sucked or forced out of the housing for a remote detection of a leak.

According to an aspect of the invention, the leak detecting system comprises a gas leak detector calibrating unit which is accessible for the gas leak detector by moving the leak detector housing towards the gas leak detector calibrating unit and/or vice versa.

The gas leak detector calibrating unit may be designed at least substantially as a gas container valve unit of a gas container, and where the gas leak detector calibrating unit is provided as part of a gas leak detecting system, and where the gas leak detector calibrating unit is capable of being moved from a position outside a dedicated gas leak detecting position of the gas leak detecting system and into a dedicated gas leak detecting position of the system, and vice versa.

A possible advantage of designing the gas leak detector calibrating unit as a gas container valve unit is that a large number of different gas leak detectors, and not only a gas leak detector according to the present invention, and which during gas leak detection fit a gas container valve unit, will fit the gas leak detector calibrating unit.

The gas leak detector calibrating unit may preferably be designed substantially both as a gas container valve unit and as part of a surface of a gas container, said part of the surface at least being the surface in immediate vicinity of the gas container valve unit. A possible advantage of designing the gas leak detector calibrating unit both as a gas container valve unit and as a surface part of the gas container is that an even larger number of gas leak detectors, also those not intended for fitting a gas container valve unit, and not only a gas leak detector according to the present invention, will fit the gas leak detector calibrating unit.

The gas leak detector calibrating unit may function based on any suitable calibrating method and device. Possibly, the gas leak detector calibrating unit may be provided with e.g. a mass flow-meter together with a controller. The controller controls a selected leakage of gas from a source of gas, either controlling a certain total amount of gas or a certain flow-rate of gas, and the mass flow-meter measures the total amount of gas and/or the flow-rate of gas. The measurements performed by e.g. the mass flow-meter are compared to the measurements performed by the gas leak detector. Any discrepancy between the measurements may then be used to calibrate the gas leak detector.

A possible advantage of a gas leak detector calibrating unit according to the aspect of the invention is that it is not necessary to use a gas container as such having a known certain leakage for calibrating a gas leak detector. Any gas leakage controlled by the controller and measured by e.g. a mass flow-meter may be used for calibrating any gas leak detector, not only detectors according to the invention, but also prior art gas leak detectors and future gas leak detectors.

In general by writing that 'it is an advantage' by the present invention and referring to an advantage, it must be understood that this advantage may be seen as a possible advantage provided by the invention, but it may also be understood that the invention is particularly, but not exclusively, advantageous for obtaining the described advantage.

In general the various aspects, i.e. device, method and system and advantages of the invention may be combined and coupled in any way possible within the scope of the invention.

These and other aspects, features and/or advantages of the invention will be apparent from and elucidated with reference to the embodiments described hereinafter.

### BRIEF DESCRIPTION OF THE DRAWINGS

Embodiments of the invention will be described, by way of example only, with reference to the drawings, in which
Fig. 1 is a side-view picture of a leak detecting system,
Fig. 2A and Fig. 2B is a gas leak detector in a side/top view,
Fig. 3 is an assembly drawing of the gas leak detector in an exploded view,
Fig. 4 is a drawing of a cross-section of the gas leak detector when a housing of the gas leak detector is connected to a surface part of the gas container (not shown),
Figs. 5-8 are drawings of various gas leak detector configurations.

### DESCRIPTION OF EMBODIMENTS

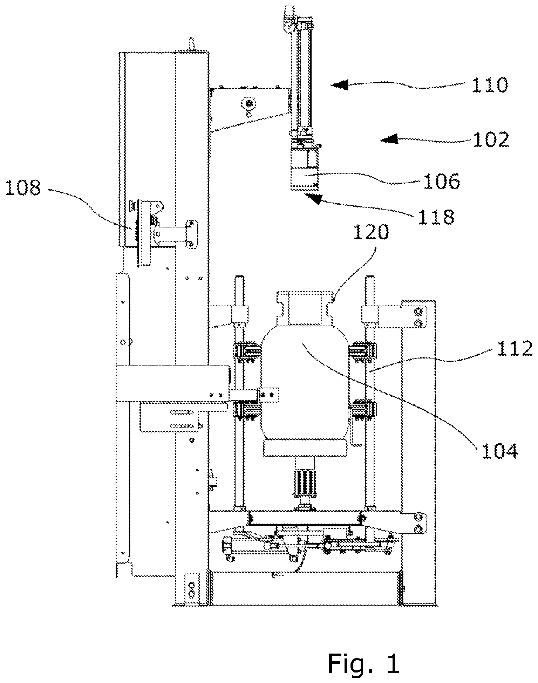

Fig. 1 shows an embodiment of the invention. The figure shows a side-view picture of a gas leak detecting system 101. The gas leak system 101 is generally used for detecting if a gas container with a gas under pressure, such as liquid petroleum gas (LPG), has a gas container valve unit which leaks and/or if an assembly such as a bung between the gas container valve unit and the gas container has a leak. Normally the system works automatically and sorts out any or those containers having one of the mentioned first and/or second types of leak of gas from the pressurised gas container 104.

The shown gas leak detecting system 101 can be a part of a complete transport system for transporting the gas container in a gas container filling system and/or in a gas leak detecting system. In the shown embodiment a leak detector 102 is provided for the gas containers to be transported to a position of the gas leak detector. Alternatively, a gas leak detector is mounted on each transport unit in the transport system in order to detect any leak of gas for a prolonged period of detection time compared to if the gas containers where to be transported to the position of the gas leak detector. The gas leak detecting system may include a gas leak detector calibrating unit which is accessible for the gas leak detector by moving the leak detector housing towards the gas leak detector calibrating unit and/or vice versa.

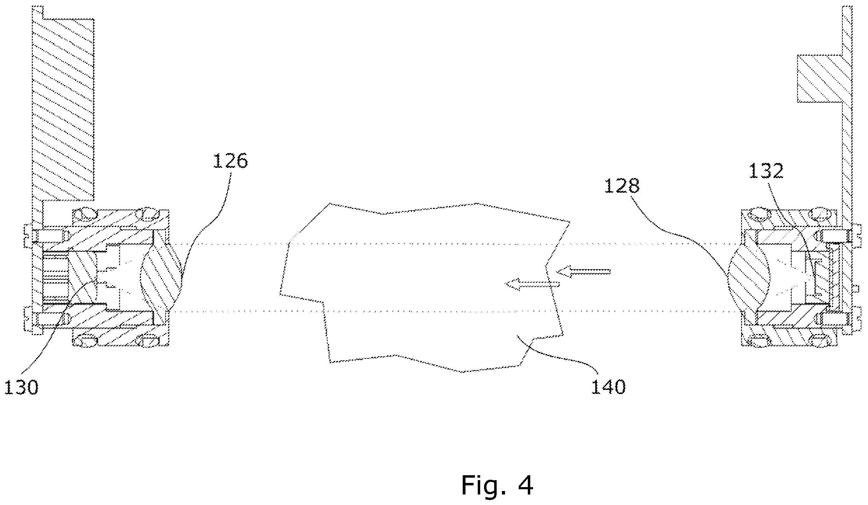

The gas leak detecting system in Fig. 1 comprises a gas leak detector 102 with a housing 106, which detector and housing will be further described in the following figures. The system further includes a moving means 110 for moving the gas leak detector 102 with the housing 106 towards the gas container 104 in order to form a substantially closed hollow space enclosed by the housing and the gas container. The substantially closed hollow space is schematically shown in close-up in Fig. 4. Alternatively, the housing is connectable to the gas container by moving the gas container towards the housing. The gas container 104 is handled by a handling means 112 which in this embodiment includes a means for centering and aligning the gas container 104 beneath a centre of the gas leak detector housing 106.

In the figures a cylindrical housing 106 is shown, though it is to be understood that the housing may have any form as long as it has an opening which fits around the container valve unit and preferably fits within a sleeve 120 of the container and as long as it can be adapted to form the substantially closed hollow space when connected to the gas container.

A control system 108 for is shown which includes electronic and pneumatic control for the gas leak detecting system 101. The control system 108 is adapted for controlling power supply and signal communication for the leak detecting system 101. Furthermore the control system is adapted for controlling any air needed for the moving means 110 as well as controlling any adding of cleaning and/or turbulence air to inside the housing prior to detecting and/or while detecting any leak with the leak detecting system 101.

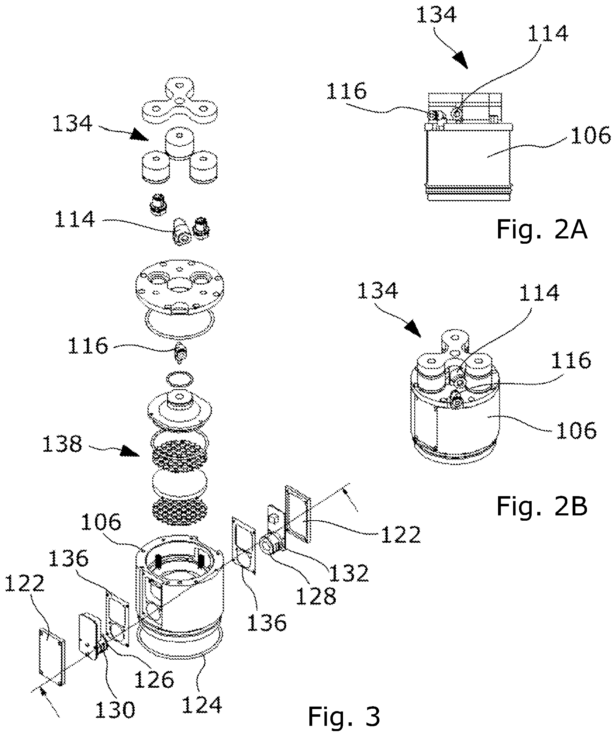

In one way of operating the gas leak detection system 101, the gas container 104 enters the gas leak detection system 101 and is aligned beneath the centre of the gas leak detector housing 106. Clean air, not containing any of the gas, is added to inside the housing 106, especially prior to any detection, in order to cause a controlled environment within the housing 106 and/or for resetting detection means. The clean air is added through a cleaning air inlet 114 which is shown in more detail in Fig. 2. When the housing 106 is moved towards the gas container 104 clean turbulence air is added to the inside of the housing through a turbulence air inlet 116.

The turbulence air inlet may be provided as an inlet being directed tangentially, or an inlet at least not being directed radially or diagonally, to the cross-sections of the housing. Preferably, the inlet is provided at the opening of the housing to ensure turbulence being established in the entire closed hollow space of the housing. The inlet may be provided as a plurality of small holes along an inner surface of the housing. The turbulence air is provided in order to create turbulence within the housing in order to prevent any leaking gas from hiding and hereby in order to improve detection of any leaking gas. The air inlets 114, 116 are shown in further detail in Fig. 2.

By moving the housing towards the gas container, the housing 106 is connected to the gas container so as for the housing to surround a valve unit of the gas container and so as to surround a surface part of the gas container where the valve unit is provided. By this movement and structural configuration of the housing and by providing a gasket on the housing towards the gas container, the substantially closed hollow space is formed within the housing. Just prior to or upon forming the substantially closed hollow space within the housing 106, further adding of cleaning air is possibly or preferably stopped. Furthermore, just afterwards or upon the gasket touching the gas container 104, further adding of turbulence air is possibly or preferably stopped. Though, the turbulence air may also be added during the quite short detection period, e.g. if the period and/or the amount of air added is so small that the added air can remain within the substantially closed hollow space. Furthermore the amount of air added needs to be as low as possible or even zero with the aim to obtain as high a concentration of leaking gas within the substantially closed hollow space as possible.

While the substantially closed hollow space is provided within the housing, i.e. while any leak of gas remains within the substantially closed hollow space, a detection of any leaking gas from the gas container is carried out within the housing 106.

Alternatively, the timing condition 'while' may be prolonged to just before and/or while and/or just after the substantially closed hollow space is provided within the housing. 'While' may mean during the complete period of having the substantially closed hollow space, but may alternatively only mean for a period of e.g. the mid 0,1 second of a complete period of e.g. 0,3 seconds of having the substantially closed hollow space. 'Just before, while and just after' may mean that the detection is started 0,1 second before the housing forms the substantially closed hollow space with the gas container 104, during 0,3 second when the substantially closed hollow space is provided and until 0,1 second after starting a movement of the gas container and/or the housing 106 away from each other - thus also until e.g. 0,1 second after opening the substantially closed hollow space.

Independent of the timing condition of while, the detection is in accordance with embodiments of the invention both provided within the housing and while any leak of gas remains within the substantially closed hollow space in the housing, which among others means that there is not sucked or pressed any gas out of the substantially closed space for detection. This also means that any leaking gas is not sucked or pressed out of the housing 106 or the substantially closed hollow space for detection. If the detection is started shortly before forming the substantially closed hollow space and/or ended just after the substantially closed hollow space is opened it can not necessarily be assured that just a little gas exits the housing through an opening 118 in the housing during detection.

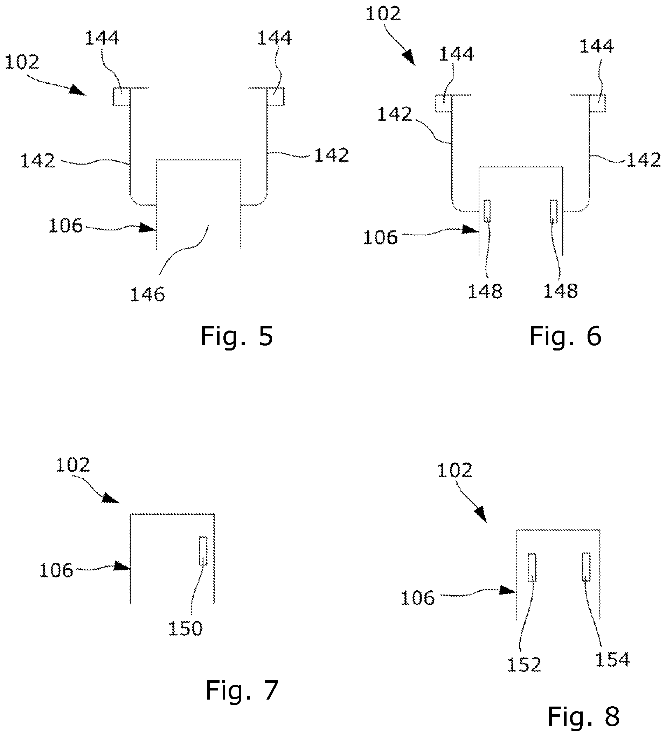

The detection can be provided by detecting a composition of the gas contained in the substantially closed hollow space by detection means as it will be further described with reference to Figs. 2 - 8. Alternatively or additionally, the detection can be provided by detection of sound waves within the housing, as shown in Fig. 7, which sound waves evolves from any leakage.

Fig. 2A and Fig. 2B is a gas leak detector shown in a side/top view. In particular the side/top view shows a cover 122 covering detection means provided in the housing 106. On the diametrically opposite side of the housing further detection means are provided behind a second cover (not seen on the figure). Furthermore, Fig. 2 shows signal connections 116 for the detection means provided in the housing. In case the detection means needs power, the signal connections may also include power for the detection means. Finally, the air inlets 114, 116 are shown in further detail in Fig. 2.

Fig. 3 is an assembly drawing of the gas leak detector 102 in an exploded view. The figure shows the two covers 122, of which the left side cover is also shown on Fig. 2B, when the covers are assembled to the housing.

Behind the covers 122, the detection means are provided. In this example the detection means comprises outputting means in the form of an infrared light transmitter 132 with an optical lens 128 and receiving means in the form of an infrared light receiver 130 with an optical lens 126. Together with gaskets 136 or similar means provided between the remaining parts shown for assembling the housing 106, the means 124 for providing a substantially gas tight connection between the housing 106 and the gas container are shown. The means 124 is in the example a flexible material such as a gasket 124.

Furthermore, Fig. 3 shows combined vibration damping and connection means 134 which can be used to fix the leak detector to the moving means 110 shown in Fig. 1. Also, a filter and screen arrangement 138 is shown, said arrangement intended for providing an even distribution of clean air being flushed into the housing for expelling any gas possibly remaining from an earlier gas leak detection.

Fig. 4 is a principle drawing of a cross-section of the gas leak detector 102 when the housing 106 of the gas leak detector 102 is connected to a surface part of the gas container. The figure shows the gas container valve unit and the surface part surrounding the valve unit. In this position the housing 106 and the surface part forms the substantially closed hollow space which is used for detection of any of the first and/or second leak. It can be seen that detection means, such as 130, 132, are provided for a detection, which detection is provided within the substantially closed hollow space.

The detection means comprises an infrared light receiver 130 with optical lens 126 and an infrared light transmitter 132 with the optical lens 128. The detection means comprising the infrared light transmitter is build as an explosion safe unit fulfilling the Exxd according to European norms. The infrared light transmitter 132 is generating energy to be received by the infrared light receiver 130 (not shown in this figure).

The infrared light transmitter 132 is in the shown embodiment mounted on a piece of printed circuit board and provided in a number of individually assembled parts which along an outer surface is provided with sealing means. The sealing means is provided in order for the explosion safe unit to form part of the housing 106 and for forming the substantially closed hollow space when mounted in the housing. It is to be understood that when the housing is assembled with the unit shown and described, a part of the outputting means, i.e. the infrared light transmitter with the optical lens 128, form a part enclosing the substantially closed hollow space.

Fig. 4 is a principle drawing of an IR light signal being outputted - or transmitted - from the infrared light transmitter and received in the infrared light receiver through the indicated gas leak 140. It is indicated how the infrared light signal travels from the infrared transmitter 132 to the infrared receiver 130. When the infrared transmitter are provided on each side of the housing 106 as shown in the other figures and when the housing is connected to the gas container 104 the infra red light signal is outputted to the substantially closed hollow space and can be received by the infrared light receiver 130 along with at least one possible change of the signal due to the signal being sent through the substantially closed hollow space. In the example of infrared light transmitters and receivers the determination of whether or not gas is leaking from the container 104 is determined based on an electrical signal from the infra red light receiver and corresponding to the energy received. The energy received depends on the energy send and the composition of the gas contained in the substantially closed hollow space. This electrical signal is possibly transferred to the control system 108 and the determination is possibly carried out in the control system and may e.g. result in lighting a red lamp when a certain level of leaking gas is detected and afterwards sorting out the particular leaking gas container.

Figs. 5-8 are drawings of various gas leak detectors configurations which may be used as an alternative and/or in addition to the above described.

Fig. 5 shows an embodiment where one or more or as in the shown example both the infrared light transmitter 144 and the infrared light receiver 144 are provided in a distance from the housing and transferral of infrared light signals are provided with help of optical fibres 142. As shown the optical fibres 142 are in an operable connection with the transmitting and receiving means and ending and starting within the housing 106. An end or start part 146 of one or more of the optical fibres hereby forms a part enclosing the substantially closed hollow space.

Fig. 6 shows an embodiment where light signals are provided from remote signal transmitters and/or receivers 144 with help of optical fibres 142 ending and starting at optical lenses and/or pieces of hard glass 148 provided in the housing 106.

Fig. 7 shows an embodiment of the invention where a microphone provided in the housing is used to detect whether or not a leak is present in that a leaking container may give high frequency vibrations which can be detected by the microphone 150.

Fig. 8 shows an embodiment of the invention where the detection means comprises a light sensitive element 154 and a light source 152. These detection means may be used to record a picture within the housing in order hereby to detect whether or not a leaking gas container is being tested. The leak may be detected in that a leaking gas container may give a certain picture recorded by the light sensitive element.

Although the present invention has been described in connection with preferred embodiments, it is not intended to be limited to the specific form set forth herein. Rather, the scope of the present invention is limited only by the accompanying claims.

In this section, certain specific details of the disclosed embodiment are set forth for purposes of explanation rather than limitation, so as to provide a clear and thorough understanding of the present invention. However, it should be understood readily by those skilled in this art, that the present invention may be practised in other embodiments which do not conform exactly to the details set forth herein, without departing significantly from the spirit and scope of this disclosure. Further, in this context, and for the purposes of brevity and clarity, detailed descriptions of well-known apparatus, circuits and methodology have been omitted so as to avoid unnecessary detail and possible confusion.

In the claims, the term "comprising" does not exclude the presence of other elements or steps. Additionally, although individual features may be included in different claims, these may possibly be advantageously combined, and the inclusion in different claims does not imply that a combination of features is not feasible and/or advantageous. In addition, singular references do not exclude a plurality. Thus, references to "a", "an", "first", "second" etc. do not preclude a plurality. Reference signs are included in the claims, however the inclusion of the reference signs is only for clarity reasons and should not be construed as limiting the scope of the claims.

The invention disclosed a possibility of providing a faster leak detection from a container with a gas. A container gas leak detector with a housing 106 is connectable to the gas container 104 so as to surround a container valve unit and a surface part of the container where the valve unit is provided, and with means 124 for providing a substantially gas tight connection between the housing 106 and the surface part and a substantially closed hollow space within the housing when the housing 106 is connected to the surface part and where the gas-leak detector 102 furthermore includes detection means 126, 128, 130, 132, 142, 148, 150, 154 for detecting the leak(s) and the detection is provided in the substantially closed hollow space in the housing while any leak of gas remains within the substantially closed hollow space.

## Claims

1. Gas leak detector (102) for detecting a first leak of a pressurised gas from a gas container valve unit and/or a second leak between the gas container valve unit and the gas container (104), the gas-leak detector comprising
- a housing (106) which is connectable to the gas container (104) so as to surround the gas container valve unit and so as to surround a surface part of the gas container where the valve unit is provided, and wherein
- the housing (106) comprises means (124) for providing a substantially gas tight connection between the housing (106) and the surface part when the housing (106) is connected to the surface part in order to form a substantially closed hollow space within the housing, **characterised in that** the gas-leak detector (102) furthermore comprises
detection means (126, 128, 130, 132, 142, 148, 150, 154) for detecting the first and/or the second leak and the detection is provided in the substantially closed hollow space in the housing while any leak of gas remains within the substantially closed hollow space.

2. Gas leak detector according to claim 1, wherein the detection means comprises outputting means (132, 128, 142, 148, 152) for outputting a signal to the substantially closed hollow space and/or receiving means (126, 130, 142, 148, 150, 154) for receiving the signal along with at least one possible change of the signal due to the signal being sent through the substantially closed hollow space.

3. Gas leak detector according to claim 2, wherein detection of the first and/or second leak is corresponding to and determined based on the signal received by the receiving means (126, 130, 142, 148, 150, 154).

4. Gas leak detector according to any of the preceding claims, wherein at least a part of the detection means is adapted to form a part enclosing the substantially closed hollow space.

5. Gas leak detector according to any of claims 2-4, wherein the signal is an optical signal.

6. Gas leak detector according to claim 5, wherein the detection means comprises at least one optical lens (126, 128, 148).

7. Gas leak detector according to claim 5 or 6, wherein the detection means comprises at least one optical fibre (142).

8. Gas leak detector according to any of claims 5-7, wherein the detection means comprises an infra red light transmitter (132, 144) and an infrared light receiver (130, 144).

9. Gas leak detector according to claim 8, wherein the infra red light transmitter (132) and/or the infrared light receiver (130) are/is comprised in the housing (106).

10. Gas leak detector according to any of the proceeding claims, wherein the detection means for detecting if there is the first and/or the second leak is provided for a detection which is only present inside the housing (106).

11. Gas leak detector according to any of the preceding claims, wherein the means (124) for providing the substantially gas tight connection comprises that an opening in the housing (106) is structurally adapted to fit to and surround the surface part of the gas container (105) where the valve unit is provided.

12. Gas leak detector according to claim 11, wherein the means for providing the substantially gas tight connection comprises that the housing (106) is provided with a flexible substantially gas tight material (124) around an opening (118) of the housing and which flexible material (124) is in contact with the surface of the gas container when the gas container is detected for any leak.

13. Gas leak detector according to any of the proceeding claims, wherein the housing (106) is connectable to the gas container by moving the housing with moving means (110) towards the gas container and/or vice versa.

14. Gas leak detector according to any of the preceding claims, where the gas, in the gas container, is a liquified gas, in particular a liquified petroleum gas (LPG).

15. Gas leak detector according to any of the proceeding claims, wherein detecting the first and/or the second leak is provided only inside the housing (106).

16. A method of detecting a first leak of a pressurised gas from a gas container valve unit and/or a second leak between the gas container valve unit and the gas container (104), the method comprising
- connecting a housing (106) to the gas container (104) so as to surround the gas container valve unit and so as to surround a surface part of the gas container where the valve unit is provided, and
- providing a substantially gas tight connection between the housing (106) and the surface part when the housing is connected to the surface part in order to form a substantially closed hollow space within the housing (106), **characterised in that** the method furthermore comprises
detecting the first and/or the second leak in the substantially closed hollow space in the housing (106) while any leak of gas remains within the substantially closed hollow space.

17. A method, according to claim 16, of detecting the first and/or the second leak, further comprising adding (114, 116) a gas to inside the housing (106) prior to detecting and/or while detecting any leak in order to empty the housing (106) from any gases or particles which may interfere with the detection and/or in order to improve detection of any gas.

18. A gas leak detecting system for transporting a plurality of gas containers, said system comprising a plurality of gas leak detectors (102) according to any of the claims 1-15, and where each gas leak detector (102) is mounted on a transport unit in a transport system for transporting the gas container in a gas container filling system and/or in a gas leak detecting system, and where the gas leak detectors (102) are capable of being displaced along the transport unit of the transport system together with the gas containers and at the same speed as the gas containers, the gas leak detectors thereby being operable to detect any leak of gas for a prolonged period of time compared to if the gas containers (104) where to be transported to a stationary leak detecting station.

19. A gas leak detecting system according to claim 18, where the prolonged period includes a period while the containers are transported in the transport system.

20. A gas leak detecting system according to claim 18 or claim 19, where the transport unit is a carrousel capable of rotating around an axis, and where the carrousel is provided with a plurality of individual locations, each of said locations intended for accommodating a gas container, and where at least one, preferably more, of said individual locations is provided with a gas leak detector.

21. A gas leak detecting system according to any of claims 18-20, said gas leak detecting system comprising one or more gas leak detectors (102) according to any of the claims 1 to 15 and comprising a control system (108).

22. A gas leak detecting system according to any of claims 18-21, said gas leak detecting system further comprising a gas leak detector calibrating unit, which is accessible for the gas leak detector by moving the gas leak detector housing towards the a gas leak detector calibrating unit and/or vice versa.

## Patentansprüche

1. Gasleckdetektor (102) zum Erkennen eines ersten Lecks eines Druckgases aus einer Gasbehälter-Ventileinheit und/oder eines zweiten Lecks zwischen der Gasbehälter-Ventileinheit und dem Gasbehälter (104), wobei der Gasleckdetektor umfasst
- ein Gehäuse (106) das mit dem Gasbehälter (104) verbindbar ist, um die Gasbehälter-Ventileinheit zu umgeben und um einen Flächenteil des Gasbehälters zu umgeben, auf dem die Ventileinheit bereitgestellt ist, und wobei
- das Gehäuse (106) Mittel (124) zum Bereitstellen einer im Wesentlichen gasdichten Verbindung zwischen dem Gehäuse (106) und dem Flächenteil umfasst, wenn das Gehäuse (106) mit dem Flächenteil verbunden ist, um einen im Wesentlichen geschlossenen Hohlraum innerhalb des Gehäuses auszubilden, **dadurch gekennzeichnet, dass** der Gasleckdetektor (102) weiterhin umfasst
Erkennungsmittel (126, 128, 130, 132, 142, 148, 150, 154) zum Erkennen des ersten und/oder des zweiten Gaslecks und wobei die Erkennung in dem im Wesentlichen geschlossenen Hohlraum im Gehäuse bereitgestellt wird, wobei jedes Gasleck innerhalb des im Wesentlichen geschlossenen Hohlraums bleibt.

2. Gasleckdetektor nach Anspruch 1, wobei das Erkennungsmittel Ausgabemittel (132, 128, 142, 148, 152) zum Ausgeben eines Signals an den im Wesentlichen geschlossenen Hohlraum und/oder Empfangsmittel (126, 130, 142, 148, 150, 154) zum Empfangen des Signals zusammen mit mindestens einer möglichen Änderung des Signals aufgrund des Sendens des Signals durch den im Wesentlichen geschlossenen Hohlraum umfasst.

3. Gasleckdetektor nach Anspruch 2, wobei die Erkennung des ersten und/oder zweiten Lecks dem Signal entspricht, das von den Empfangsmitteln (126, 130, 142, 148, 150, 154) empfangen wird, und auf der Grundlage dieses Signals bestimmt wird.

4. Gasleckdetektor nach einem der vorhergehenden Ansprüche, wobei mindestens ein Teil des Erkennungsmittels zum Ausbilden eines Teils beschaffen ist, das den im Wesentlichen geschlossenen Hohlraum einschließt.

5. Gasleckdetektor nach einem der Ansprüche 2-4, wobei das Signal ein optisches Signal ist.

6. Gasleckdetektor nach Anspruch 5, wobei das Erkennungsmittel mindestens eine optische Linse (126, 128, 148) umfasst.

7. Gasleckdetektor nach Anspruch 5 oder 6, wobei das Erkennungsmittel mindestens eine Glasfaser (142) umfasst.

8. Gasleckdetektor nach einem der Ansprüche 5-7, wobei das Erkennungsmittel einen Infrarot-Sender (132, 144) und einen Infrarot-Empfänger (130, 144) umfasst.

9. Gasleckdetektor nach Anspruch 8, wobei der Infrarot-Sender (132) und/oder der Infrarot-Empfänger (130) in dem Gehäuse (106) enthalten ist/sind.

10. Gasleckdetektor nach einem der vorhergehenden Ansprüche, wobei das Erkennungsmittel zum Erkennen, ob das erstes und/oder das zweite Gasleck vorhanden ist/sind, für eine Erkennung vorgesehen ist, die ausschließlich im Inneren des Gehäuses (106) erfolgt.

11. Gasleckdetektor nach einem der vorhergehenden Ansprüche, wobei das Mittel (124) zum Bereitstellen der im Wesentlichen gasdichten Verbindung umfasst, dass eine Öffnung in dem Gehäuse (106) strukturell so beschaffen ist, dass sie zu dem Flächenteil des Gasbehälters (105) passt und diesen umgibt, in dem die Ventileinheit bereitgestellt ist.

12. Gasleckdetektor nach Anspruch 11, wobei das Mittel zum Bereitstellen der im Wesentlichen gasdichten Verbindung umfasst, dass das Gehäuse (106) mit einem flexiblen, im Wesentlichen gasdichten Material (124) um eine Öffnung (118) des Gehäuses versehen wird, wobei das flexible Material (124) in Kontakt mit der Fläche des Gasbehälters ist, wenn der Gasbehälter auf Lecks untersucht wird.

13. Gasleckdetektor nach einem der vorhergehenden Ansprüche, wobei das Gehäuse (106) mit dem Gasbehälter durch Bewegen des Gehäuses mit Bewegungsmitteln (110) zum Gasbehälter und/oder in umgekehrter Richtung verbindbar ist.

14. Gasleckdetektor nach einem der vorhergehenden Ansprüche, wobei das Gas in dem Gasbehälter ein verflüssigtes Gas ist, insbesondere ein Flüssiggas (LPG).

15. Gasleckdetektor nach einem der vorhergehenden Ansprüche, wobei das Erkennen des ersten und/oder des zweiten Gaslecks ausschließlich im Inneren des Gehäuses (106) vorgesehen ist.

16. Verfahren zum Erkennen eines ersten Lecks eines Druckgases aus einer Gasbehälter-Ventileinheit und/oder eines zweiten Lecks zwischen der Gasbehälter-Ventileinheit und dem Gasbehälter (104), wobei das Verfahren umfasst
- Verbinden eines Gehäuses (106) mit dem Gasbehälter (104), um die Gasbehälter-Ventileinheit zu umgeben und um einen Flächenteil des Gasbehälters zu umgeben, auf dem die Ventileinheit bereitgestellt ist, und
- Bereitstellen einer im Wesentlichen gasdichten Verbindung zwischen dem Gehäuse (106) und dem Flächenteil, wenn das Gehäuse mit dem Flächenteil verbunden ist, um einen im Wesentlichen geschlossenen Hohlraum innerhalb des Gehäuses (106) auszubilden, **dadurch gekennzeichnet, dass** das Verfahren weiterhin umfasst
Erkennen des ersten und/oder des zweiten Gaslecks in dem im Wesentlichen geschlossenen Hohlraum im Gehäuse (106), wobei jedes Gasleck innerhalb des im Wesentlichen geschlossenen Hohlraums bleibt.

17. Verfahren nach Anspruch 16 zum Erkennen des ersten und/oder des zweiten Lecks, weiterhin umfassend das Einbringen (114, 116) eines Gases in das Innere des Gehäuses (106) vor dem Erkennen und/oder während des Erkennens eines Lecks, um Gase oder Teilchen, die die Erkennung stören können und/oder um die Erkennung eines Gases zu verbessern, aus dem Gehäuse (106) auszutreiben.

18. Gasleckdetektionssystem zum Transport einer Mehrzahl von Gasbehältern, wobei das System eine Mehrzahl von Gasleckdetektoren (102) nach einem der Ansprüche 1-15 umfasst und wobei jeder Gasleckdetektor (102) auf einer Transporteinheit in einem Transportsystem zum Transport der Gasbehälter in einem Gasbehälter-Befüllungssystem und/oder in einem Gasleckdetektionssystem angebracht ist und wobei die Gasleckdetektoren (102) entlang der Transporteinheit des Transportsystems zusammen mit den Gasbehältern mit derselben Geschwindigkeit wie die Gasbehälter verschiebbar sind, wobei die Gasleckdetektoren dadurch zum Erkennen jedes Gaslecks über einen längeren Zeitraum verglichen mit der Situation, in der Gasbehälter (104) zu einer ortsfesten Leckdetektionsstation transportiert werden müssten, betreibbar ist.

19. Gasleckdetektionssystem nach Anspruch 18, wobei der längere Zeitraum einen Zeitraum einschließt, in dem die Behälter in dem Transportsystem transportiert werden.

20. Gasleckdetektionssystem nach Anspruch 18 oder Anspruch 19, wobei die Transporteinheit ein um eine Achse rotierbares Karussell ist und wobei das Karussell mit einer Mehrzahl von individuellen Positionen versehen ist, wobei jede Position zur Aufnahme eines Gasbehälters vorgesehen ist und wobei mindestens eine, vorzugsweise mehrere, der individuellen Positionen mit einem Gasleckdetektor versehen ist.

21. Gasleckdetektionssystem nach einem der Ansprüche 18-20, wobei das Gasleckdetektionssystem eine oder mehrere Gasleckdetektoren (102) nach einem der Ansprüche 1 bis 15 und ein Steuersystem (108) umfasst.

22. Gasleckdetektionssystem nach einem der Ansprüche 18-21, wobei das Gasleckdetektionssystem weiterhin eine Gasleckdetektor-Kalibrationseinheit umfasst, die für den Gasleckdetektor durch Bewegen des Gasleckdetektorgehäuses in Richtung der Gasleckdetektor-Kalibrierungseinheit und/oder in umgekehrter Richtung zugänglich ist.

## Revendications

1. Détecteur de fuites de gaz (102) pour détecter une première fuite d'un gaz sous pression provenant d'une unité valve de conteneur de gaz et/ou une deuxième fuite entre l'unité valve de conteneur de gaz et le conteneur de gaz (104), le détecteur de fuites de gaz comprenant
- un boîtier (106) pouvant être raccordé au conteneur de gaz (104) de manière à entourer l'unité valve de conteneur de gaz et à entourer une pièce de surface du conteneur de gaz dans laquelle est située l'unité valve, et dans lequel
- le boîtier (106) comprend un moyen (124) pour réaliser un raccordement essentiellement étanche au gaz entre le boîtier (106) et la pièce de surface quand le boîtier (106) est raccordé à la pièce de surface afin de former un espace creux essentiellement fermé à l'intérieur du boîtier, **caractérisé en ce que** le détecteur de fuites de gaz (102) comprend également
des moyens de détection (126, 128, 130, 132, 142, 148, 150, 154) pour détecter la première et/ou la deuxième fuite et la détection est réalisée dans l'espace creux essentiellement fermé à l'intérieur du boîtier alors que toute fuite de gaz reste à l'intérieur de l'espace creux essentiellement fermé.

2. Détecteur de fuites de gaz selon la revendication 1, dans lequel le moyen de détection comprend des moyens d'émission (132, 128, 142, 148, 152) pour émettre un signal vers l'espace creux essentiellement fermé et/ou des moyens de réception (126, 130, 142, 148, 150, 154) pour recevoir le signal ainsi qu'au moins un changement éventuel du signal résultant de l'envoi du signal au travers de l'espace creux essentiellement fermé.

3. Détecteur de fuites de gaz selon la revendication 2, dans lequel la détection de la première et/ou de la deuxième fuite correspond à et est déterminée sur la base du signal reçu par les moyens de réception (126, 130, 142, 148, 150, 154).

4. Détecteur de fuites de gaz selon l'une quelconque des revendications précédentes, dans lequel au moins une partie du moyen de détection est adaptée pour former une pièce renfermant l'espace creux essentiellement fermé.

5. Détecteur de fuites de gaz selon l'une quelconque des revendications 2 à 4, dans lequel le signal est un signal optique.

6. Détecteur de fuites de gaz selon la revendication 5, dans lequel le moyen de détection comprend au moins une lentille optique (126, 128, 148).

7. Détecteur de fuites de gaz selon la revendication 5 ou 6, dans lequel le moyen de détection comprend au moins une fibre optique (142).

8. Détecteur de fuites de gaz selon l'une quelconque des revendications 5 à 7, dans lequel le moyen de détection comprend un émetteur de lumière infrarouge (132, 144) et un récepteur de lumière infrarouge (130, 144).

9. Détecteur de fuites de gaz selon la revendication 8, dans lequel l'émetteur de lumière infrarouge (132) et/ou le récepteur de lumière infrarouge (130) est/sont compris dans le boîtier (106).

10. Détecteur de fuites de gaz selon l'une quelconque des revendications précédentes, dans lequel le moyen de détection pour détecter la présence de la première et/ou de la deuxième fuite est situé pour réaliser une détection uniquement à l'intérieur du boîtier (106).

11. Détecteur de fuites de gaz selon l'une quelconque des revendications précédentes, dans lequel le moyen (124) pour réaliser le raccordement essentiellement étanche au gaz comprend le fait qu'une ouverture dans le boîtier (106) est structurellement adaptée pour s'ajuster sur et entourer la pièce de surface du conteneur de gaz (105) dans laquelle est située l'unité valve.

12. Détecteur de fuites de gaz selon la revendication 11, dans lequel le moyen pour réaliser le raccordement essentiellement étanche au gaz comprend le fait que le boîtier (106) possède un matériau souple (124) essentiellement étanche au gaz autour d'une ouverture (118) du boîtier et ce matériau souple (124) est en contact avec la surface du conteneur de gaz quand le conteneur de gaz est soumis à une détection de fuites.

13. Détecteur de fuites de gaz selon l'une quelconque des revendications précédentes, dans lequel le boîtier (106) peut être raccordé au conteneur de gaz en déplaçant le boîtier à l'aide d'un moyen de déplacement (110) en direction du conteneur de gaz et/ou inversement.

14. Détecteur de fuites de gaz selon l'une quelconque des revendications précédentes, dans lequel le gaz, dans le conteneur de gaz, est un gaz liquéfié, en particulier un gaz de pétrole liquéfié (GPL).

15. Détecteur de fuites de gaz selon l'une quelconque des revendications précédentes, dans lequel la détection de la première et/ou de la deuxième fuite est réalisée uniquement à l'intérieur du boîtier (106).

16. Procédé de détection d'une première fuite d'un gaz sous pression provenant d'une unité valve de conteneur de gaz et/ou d'une deuxième fuite entre l'unité valve de conteneur de gaz et le conteneur de gaz (104), le procédé comprenant
- le raccordement d'un boîtier (106) au conteneur de gaz (104) de manière à entourer l'unité valve de conteneur de gaz et à entourer une pièce de surface du conteneur de gaz dans laquelle est située l'unité valve, et
- la réalisation d'un raccordement essentiellement étanche au gaz entre le boîtier (106) et la pièce de surface quand le boîtier est raccordé à la pièce de surface afin de former un espace creux essentiellement fermé à l'intérieur du boîtier (106), **caractérisé en ce que** le procédé comprend également
la détection de la première et/ou de la deuxième fuite dans l'espace creux essentiellement fermé à l'intérieur du boîtier (106) alors que toute fuite de gaz reste à l'intérieur de l'espace creux essentiellement fermé.

17. Procédé, selon la revendication 16, de détection de la première et/ou de la deuxième fuite, comprenant également l'ajout (114, 116) d'un gaz à l'intérieur du boîtier (106) avant la détection et/ou pendant la détection de toute fuite afin de vider du boîtier (106) tous les gaz ou particules susceptibles d'interférer avec la détection et/ou afin d'améliorer la détection de tout gaz.

18. Système de détection de fuites de gaz pour le transport de plusieurs conteneurs de gaz, ledit système comprenant plusieurs détecteurs de fuites de gaz (102) selon l'une quelconque des revendications 1 à 15, et dans lequel chaque détecteur de fuites de gaz (102) est monté sur une unité de transport dans un système de transport pour transporter le conteneur de gaz dans un système de remplissage de conteneurs de gaz et/ou dans un système de détection de fuites de gaz, et dans lequel les détecteurs de fuites de gaz (102) peuvent être déplacés le long de l'unité de transport du système de transport avec les conteneurs de gaz et à la même vitesse que les conteneurs de gaz, les détecteurs de fuites de gaz étant ainsi utilisables pour détecter toute fuite de gaz pendant une période de temps prolongée par comparaison au cas où les conteneurs de gaz (104) seraient transportés vers une station de détection de fuites fixe.

19. Système de détection de fuites de gaz selon la revendication 18, dans lequel la période prolongée comprend une période pendant laquelle les conteneurs sont transportés dans le système de transport.

20. Système de détection de fuites de gaz selon la revendication 18 ou 19, dans lequel l'unité de transport est un carrousel pouvant tourner autour d'un axe, et dans lequel le carrousel possède plusieurs emplacements individuels, chacun desdits emplacements étant conçu pour recevoir un conteneur de gaz, et dans lequel au moins un, de préférence plusieurs, desdits emplacements individuels possède un détecteur de fuites de gaz.

21. Système de détection de fuites de gaz selon l'une quelconque des revendications 18 à 20, ledit système de détection de fuites de gaz comprenant un ou plusieurs détecteurs de fuites de gaz (102) selon l'une quelconque des revendications 1 à 15 et comprenant un système de commande (108).

22. Système de détection de fuites de gaz selon l'une quelconque des revendications 18 à 21, ledit système de détection de fuites de gaz comprenant également une unité d'étalonnage de détecteur de fuites de gaz, qui est accessible pour le détecteur de fuites de gaz en déplaçant le boîtier du détecteur de fuites de gaz vers l'unité d'étalonnage de détecteur de fuites de gaz et/ou inversement.
